# EUROPÄISCHE PATENTSCHRIFT

(11) **EP 1 197 394 B1**
(45) Veröffentlichungstag und Bekanntmachung des Hinweises auf die Patenterteilung: **31.08.2005**
(21) Anmeldenummer: 01123013.3
(22) Anmeldetag: 26.09.2001
(51) Int. Cl.: B60R 11/02

(54) **Elektrisches Gerät mit Halterung und Abdeckung**
Electrical apparatus with support and cover
Appareil électrique avec support et couvercle

(30) Priorität: 14.10.2000 DE 10051020
(43) Veröffentlichungstag der Anmeldung: 17.04.2002
(73) Patentinhaber: ROBERT BOSCH GMBH, 70442 Stuttgart (DE)
(72) Erfinder: Flohr, Heinrich, 31137 Hildesheim (DE); Vogt, Siegfried, 31139 Hildesheim (DE)

(56) Entgegenhaltungen:
- GB-A- 2 339 734
- US-A- 4 180 299

## Beschreibung

### Stand der Technik

Die Erfindung geht aus von einem elektrischen Gerät nach der Gattung des Hauptanspruchs. Es sind schon elektrische Geräte bekannt, die an einer Halterung angeordnet sind und aus dieser Halterung entnehmbar sind. Zum Beispiel ist aus der Zeitschrift "Teletraffic" Mai/Juni 1999, S. 20, ein Bildschirm bekannt, der aus einer Halterung in einem Fahrzeug entnehmbar ist. Ferner sind auch Telefonvorrichtungen bekannt, die in Halterungen in einem Fahrzeug angeordnet sind und die aus der im Fahrzeug angeordneten Haltevorrichtung entnehmbar sind. Nach der Entnahme muß ein Benutzer die verschiedenen, aus dem Fahrzeug entnommenen Geräte in seiner Kleidung oder in von ihm mitzuführenden Taschen verstauen, z.B. in einer speziellen Tasche für das Mobiltelefon. Hierbei kann er empfindliche Teile des elektrischen Geräts, z.B. eine Anzeigenfläche oder elektrische Kontakte, berühren und dabei zerstören. Ferner kann einem Benutzer bei dem Verstauen das elektrische Gerät hinfallen oder es kann von dem Benutzer ein Platz gewählt werden, in dem das elektrische Gerät nicht sicher oder stoßfest verstaut ist.

Aus der GB 2 339 734 A ist ein Computer bekannt, der in ein Gehäuse eingesetzt wird und mit dem Gehäuse in eine Halterung in einer Fahrzeuginstrumententafel eingesetzt wird.

Aus der gattungsbildenden US 4,180,299 ist ein Radiogerät bekannt, das in eine Kassettenbox eingeschoben wird. Die Kassettenbox kann mittels Rasthaken an einer Dachbefestigung eingerastet werden, durch eine Betätigung eines ersten Hebels geöffnet werden und durch Betätigung eines zweiten Hebels aus der Verrastung an der Halterung am Dach des Fahrzeugs gelöst werden.

### Vorteile der Erfindung

Das erfindungsgemäße elektrische Gerät mit den Merkmalen des Hauptanspruchs hat demgegenüber den Vorteil, dass an dem elektrischen Gerät eine Abdeckung anbringbar ist und dass das elektrische Gerät mit der Abdeckung aus der Halterung lösbar ist. Ein Schutz des elektrischen Gerätes ist dabei durch die Abdeckung gegeben. Ein weiteres Verpacken in eine spezielle, für das elektrische Gerät vorgesehene Tasche oder eine zusätzliche Ummantelung kann entfallen. Besonders vorteilhaft ist weiterhin, dass das elektrische Gerät nur mit der Abdeckung aus der Halterung entnehmbar ist, so dass ein versehentliches Herauslösen des elektrischen Geräts aus der Halterung vermieden wird. Insbesondere empfindliche Teile des elektrischen Geräts, wie z.B. eine Anzeigefläche oder elektrische Kontakte, werden dabei direkt durch die Abdeckung geschützt, so dass eine Beschädigung bei der Herausnahme oder bei einem Transport des elektrischen Gerätes vermieden wird. Ferner ist vorteilhaft, dass durch eine Entnahme des elektrischen Geräts, z.B. bei der Verwendung in einem Fahrzeug, aus einem Fahrzeug ein Diebstahlsanreiz z.B. durch eine teure Autoradiovorrichtung oder eine hochwertige Anzeigevorrichtung vermieden wird, ohne dass bei der Herausnahme eine Gefahr besteht, das elektrische Gerät zu zerstören.

Erfindungsgemäß ist an der Abdeckung ein Rasthaken angeordnet, der in das elektrische Gerät einrastet. Dabei ist das elektrische Gerät in Folge des Einrastens aus der Halterung lösbar. Hierdurch ist es möglich, bereits durch ein Aufstecken der Abdeckung auf das elektrische Gerät dieses aus der Halterung zu lösen, so dass eine schnelle und einfache Entnahme des elektrischen Gerätes möglich ist.

Durch die in den Unteransprüchen aufgeführten Maßnahmen sind vorteilhafte Weiterbildungen und Verbesserungen des im Hauptanspruch angegebenen elektrischen Geräts möglich. Besonders vorteilhaft ist es, auch ein Aufstecken und Befestigen des elektrischen Gerätes an der Halterung durch die Betätigung eines Bedienelements an der Abdeckung zu ermöglichen, durch die ein an der Abdeckung befindlicher Rasthaken das elektrische Gerät wieder freigibt und in die Halterung einrasten lässt, wodurch auch ein Aufstecken auf die Halterung sehr schnell möglich ist.

Außerdem ist vorteilhaft, sowohl an der Halterung als auch an dem elektrischen Gerät elektrische Kontakte vorzusehen, durch die ein Datensignal und/oder eine Betriebsspannung zwischen dem elektrischen Gerät und der Halterung übertragbar ist. Hierdurch kann auf eine Kabelverbindung zwischen der Halterung und dem elektrischen Gerät verzichtet werden, so dass bei der Entnahme des elektrischen Geräts auf das Lösen einer Steckerverbindung verzichtet werden kann.

Weiterhin ist vorteilhaft, die Abdeckung mit einem Deckel verschließbar auszugestalten, so dass eine Verschmutzung des elektrischen Geräts z.B. durch Staub vermieden werden kann.

Weiterhin ist vorteilhaft, an dem elektrischen Gerät Bedienelemente anzuordnen, über die Daten in das elektrische Gerät eingebbar sind. Durch die Entnahme des elektrischen Geräts sind damit auch die Bedienelemente aus der Halterung entnehmbar, so dass eine möglicherweise im Fahrzeug verbleibende, hochwertige Elektronikeinheit für einen möglichen Dieb wertlos ist, da er nicht über die bei der Bedienung der Elektronikeinheit erforderlichen Bedienelemente verfügt.

Weiterhin ist vorteilhaft, das elektrische Gerät auch mobil zu betreiben, so dass eine Autoradiovorrichtung oder eine Navigationsvorrichtung auch außerhalb eines Fahrzeugs verwendbar sind.

Besonders vorteilhaft ist, das elektrische Gerät als eine Anzeigevorrichtung auszuführen. Anzeigevorrichtungen, insbesondere in einer Ausführung als eine Flüssigkristallanzeige, sind empfindliche Bauteile, deren Anzeigefläche leicht verschmutzen oder durch Stoß zerstört werden können. Bei einer erfindungsgemäßen Ausführung des elektrischen Gerätes als eine Anzeigevorrichtung ist einerseits im Betrieb eine gute Ablesbarkeit gegeben und andererseits ist durch die Abdeckung ein Schutz der Anzeigefläche vor Verschmutzung oder Zerstörung gegeben. Zudem kann auf zusätzliche, direkt an der Anzeigefläche angeordnete transparente, starre und fest angeordnete Schutzabdeckungen verzichtet werden.

Weiterhin ist vorteilhaft, in einem Fahrzeug neben der Anzeigevorrichtung eine weitere Anzeigevorrichtung anzuordnen, die dann verwendet wird, wenn die erste Anzeigevorrichtung aus dem Fahrzeug entnommen wurde. Hierdurch ist es möglich, dass ein Fahrer, der vergessen hat, die erste Anzeigevorrichtung in der Halterung zu befestigen oder in das Fahrzeug mitzuführen, dennoch über eine zweite Anzeigevorrichtung, die in vorteilhafter Weise als eine einfache und kostengünstige Reserveanzeige ausgeführt ist, dennoch Informationen erhalten kann.

### Zeichnung

Ausführungsbeispiele der Erfindung sind in der Zeichnung dargestellt und in der nachfolgenden Beschreibung näher erläutert. Es zeigen:

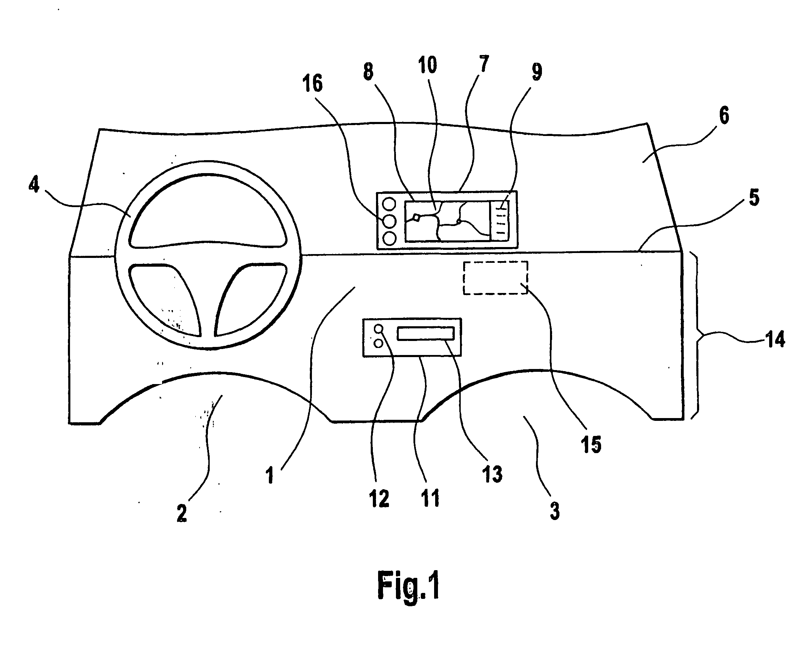

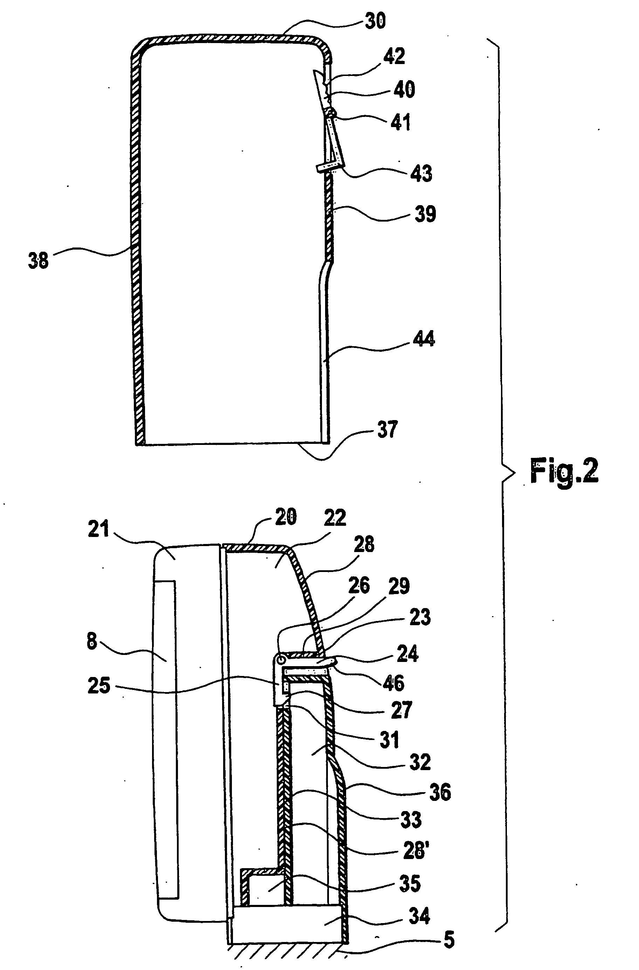

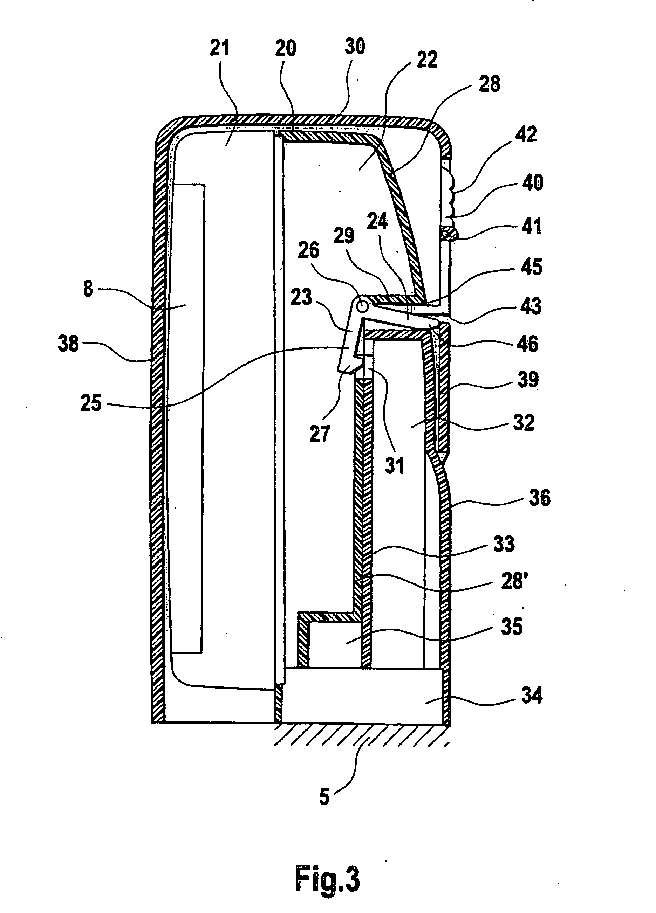

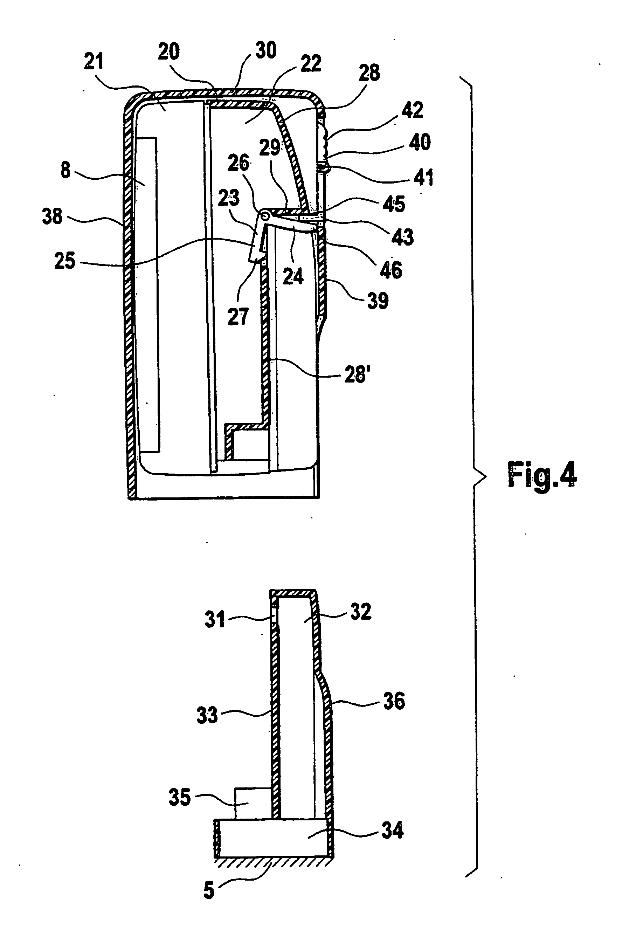

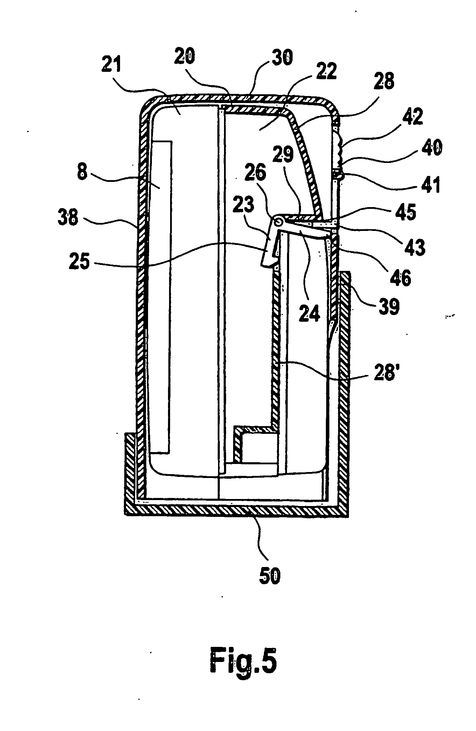

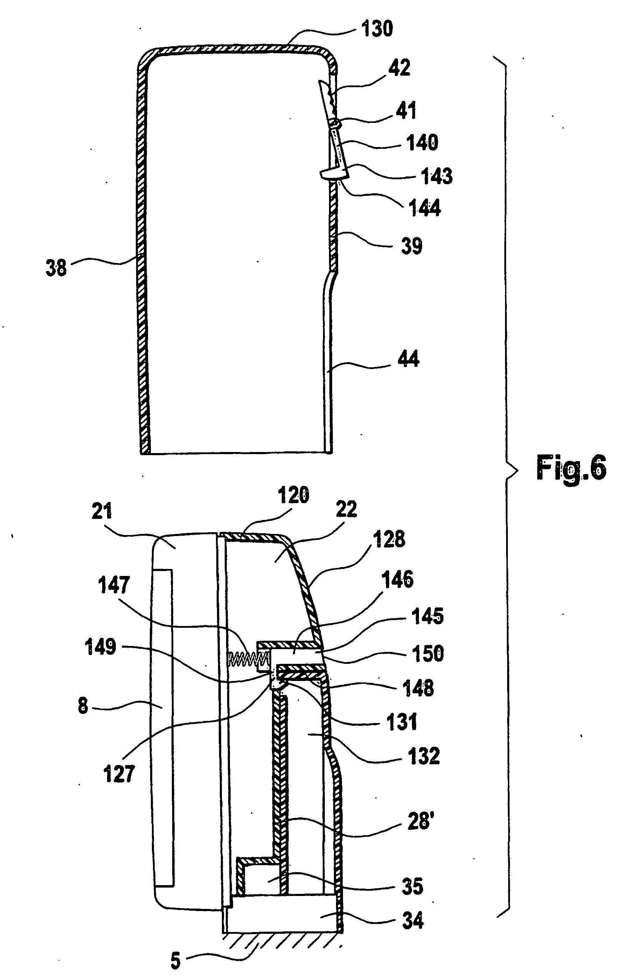

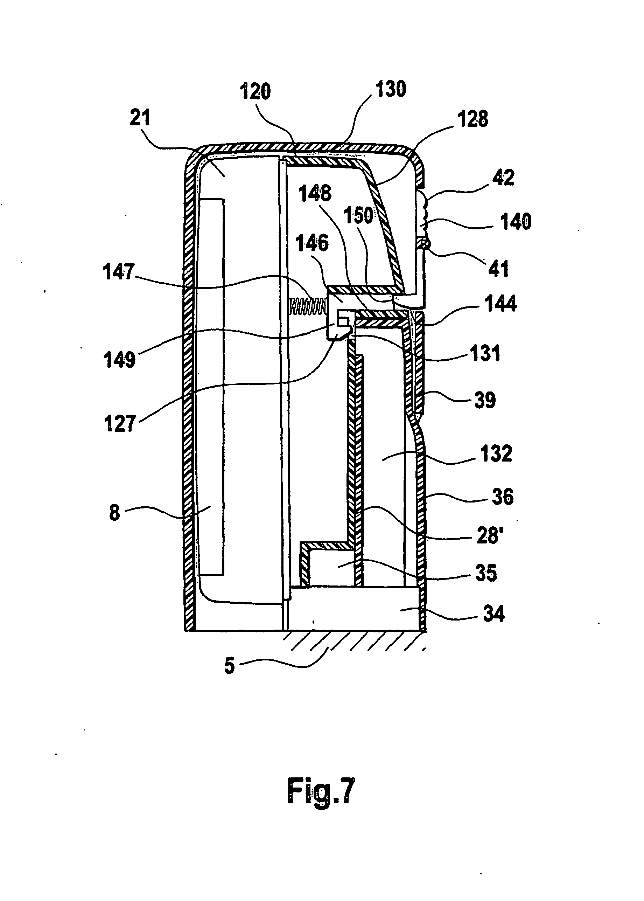

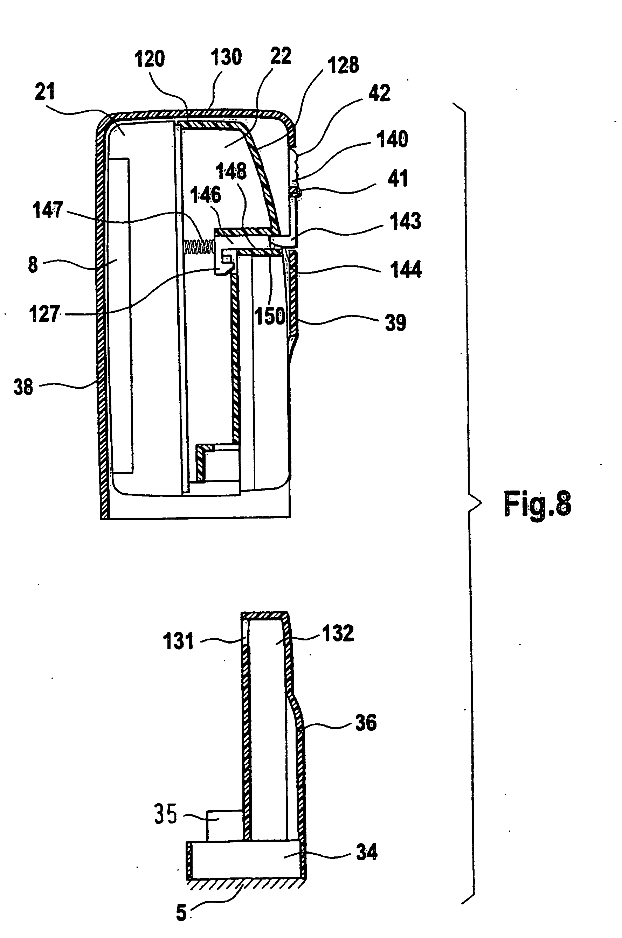

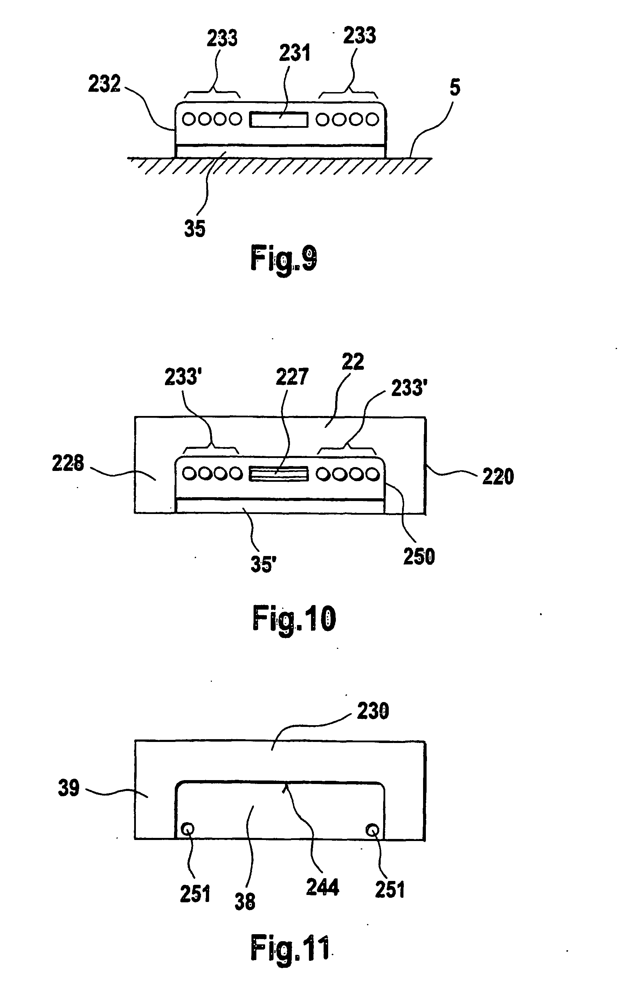

Figur 1 eine Ansicht eines vorderen Bereichs eines Innenraums eines Fahrzeugs mit einer erfindungsgemäßen Ausführung eines elektrischen Geräts als eine Anzeigevorrichtung, Figur 2 ein erstes Ausführungsbeispiel eines erfindungsgemäßen Geräts als eine Anzeigevorrichtung eingerastet in einer Halterung und eine zugehörige Abdeckung, Figur 3 die auf der Anzeigevorrichtung eingerastete Abdeckung, Figur 4 die in der Abdeckung eingerastete Anzeigevorrichtung nach einer Entnahme aus der Halterung. Figur 5 zeigt eine Anzeigevorrichtung mit einem erfindungsgemäßen Deckel, der an der Abdeckung angeordnet ist. Figur 6 zeigt eine Anzeigevorrichtung mit einem zweiten Ausführungsbeispiel für einen zweiten Rasthaken und einer hierzu passenden Abdeckung. Figur 7 zeigt die Abdeckung eingerastet auf der Anzeigevorrichtung gemäß dem zweiten Ausführungsbeispiel und Figur 8 zeigt die mit der Abdeckung entnommene Anzeigevorrichtung gemäß dem zweiten Ausführungsbeispiel. Figur 9 zeigt ein Ausführungsbeispiel einer erfindungsgemäßen Halterung. Figur 10 zeigt eine Rückansicht einer erfindungsgemäß ausgeführten Anzeigevorrichtung als ein elektrisches Gerät und Figur 11 zeigt eine Rückansicht einer erfindungsgemäßen Abdeckung.

### Beschreibung des Ausführungsbeispiels

Als ein erfindungsgemäßes elektrisches Gerät sind eine Vielzahl elektrischer Geräte ausführbar, wobei sich die erfindungsgemäßen Vorteile insbesondere dann ergeben, wenn das elektrische Gerät mobil betrieben wird, z.B. in einem Fahrzeug, oder aus Sicherheitsgründen nach einer Abschaltung des Geräts aus einer für den Betrieb des Geräts vorgesehenen Halterung entnommen wird. Eine Abdeckung ist insbesondere bei elektrischen Geräten vorteilhaft, die stoßempfindlich sind oder an denen Bauteile angeordnet sind, die durch Schmutz, Berührung oder Stoß leicht beschädigt werden können. Vor allem sind dies mobil betriebene Computer, mobile Kommunikationsgeräte, z.B. ein Kommunikationsgerät mit einer Mobilfunkschnittstelle oder einer Funk- bzw. Radioempfangsvorrichtung, oder ein als ein einzelnes elektrisches Gerät ausgeführtes Bestandteil einer dieser Vorrichtungen, z.B. eine Anzeigevorrichtung. Insbesondere in Fahrzeugen sind vor allem Bedien- und Anzeigeelemente dieser elektrischen Geräte für einen Benutzer des Fahrzeugs gut einsehbar im Fahrzeug angeordnet, wobei die elektrischen Geräte auch von außerhalb des Fahrzeugs einsehbar sein können. Einem hierdurch entstehenden Diebstahlsanreiz kann insbesondere durch die Entnahme aus dem Fahrzeug entgegengewirkt werden, so dass vor allem hochwertige elektrische Geräte für eine erfindungsgemäße Ausführung anbieten. Im Folgenden ist eine erfindungsgemäße Ausführung eines elektrischen Geräts am Beispiel einer Anzeigevorrichtung in einem Fahrzeug erläutert, die einer Fahrzeugnavigationsvorrichtung zugeordnet ist.

In der Figur 1 ist ein vorderer Bereich eines Fahrzeugs vor einem Fahrer bzw. vor einem Beifahrer des Fahrzeugs gezeigt. Eine Mittelkonsole 1 des Fahrzeugs ist zwischen einem ersten Fußraum 2 des Fahrers und einem zweiten Fußraum 3 des Beifahrers angeordnet. Oberhalb des ersten Fußraums 2 ist ein Lenkrad 4 angeordnet. Die Mittelkonsole 1 schließt mit einer Oberfläche 5 an eine Windschutzscheibe 6 an. Auf der Oberfläche 5 ist vor der Windschutzscheibe 6 eine Anzeigevorrichtung 7 angeordnet, die über eine Anzeigefläche 8 verfügt. In der Anzeigefläche 8 werden unter anderem Textdaten 9 und eine Straßenkarte 10 angezeigt. Neben der Anzeigefläche 8 sind an der Anzeigevorrichtung 7 Bedienelemente 16 angeordnet. Im Bereich der Mittelkonsole 1 ist ferner eine Bedieneinheit 11 angeordnet. An der Bedieneinheit 11 ist neben weiteren Bedienelementen 12 eine zweite Anzeige 13 angeordnet.

Die Mittelkonsole 1 ist als Teilbereich eines Dashboards 14 ausgeführt, durch das auch der erste und der zweite Fußraum 2,3 gebildet wird und das einen Durchlass für eine in der Figur 1 nicht gezeigte Lenkachse des Lenkrades 4 aufweist. Die Anzeigevorrichtung 7 ist auf einer in der Figur 1 nicht dargestellten und im Folgenden noch beschriebenen Halterung an der Oberfläche 5 des Dashboards 14 befestigt. Die Anzeigefläche 8 ist in dieser bevorzugten Ausführungsform sowohl von einem Fahrer als auch von einem Beifahrer aus einsehbar. Die Anzeigefläche 8 ist als eine vorzugsweise farbige Flüssigkristallanzeige ausgeführt. Die Anzeigevorrichtung 7 ist über an der Halterung angeordnete und in der Figur 1 ebenfalls nicht dargestellte elektrische Kontakte mit einer Navigationsvorrichtung 15 verbunden, die hinter einer Abdeckung des Dashboards 14 für einen Benutzer des Fahrzeugs nicht sichtbar angeordnet ist. Die Navigationsvorrichtung 15 ist in der Figur 1 entsprechend gestrichelt eingezeichnet. In der Navigationsvorrichtung 15 ist eine digitale Karte mit einem Straßen- und Wegenetz gespeichert, von der Ausschnitte als Karte in der Anzeigefläche 8 zur Anzeige gelangen. Das Straßen- und Wegenetz ist in einem bevorzugten Ausführungsbeispiel durch weitere gespeicherte Informationen ergänzt, z.B. Sehenswürdigkeiten oder Straßenzustandsinformationen. In der Navigationsvorrichtung 15 ist ferner eine Rechenvorrichtung angeordnet, die der Navigation des Fahrzeugs in dem gespeicherten Straßen- und Wegenetz dient. Über die Bedienelemente 16 ist insbesondere ein von dem Fahrer gewünschtes Fahrziel über die Anzeigevorrichtung 7 an die Navigationsvorrichtung 15 übermittelbar. In der bevorzugten Ausführungsform dient die Anzeigefläche 8 auch zur Anzeige von Betriebsdaten des Fahrzeugs oder einer in der Bedieneinheit 11 integrierten Autoradiovorrichtung, z.B. durch die Anzeige eines eingestellten Senders. Betriebsdaten der Autoradiovorrichtung sind ferner in der zweiten Anzeige 13 anzeigbar, so dass für den Fall, dass ein Benutzer die Anzeigevorrichtung 7 in das Fahrzeug nicht mitgeführt hat, sei es dass er die Anzeigevorrichtung 7 vergessen hat oder dass er sich nur auf einer kurzen Fahrt in einem bekannten Straßengebiet befindet, die Betriebsdaten des Radios dennoch über die zweite Anzeige 13 ausgegeben werden können und bei einer nicht an einer Halterung angeordneten Anzeigevorrichtung 7 ein Benutzer über Betriebsdaten der in der Bedieneinheit 11 integrierten Autoradiovorrichtung unterrichtet wird. Die weiteren Bedienelemente 12 dienen in einer bevorzugten Ausführungsform der Bedienung der Autoradiovorrichtung, können jedoch auch zur Bedienung der Navigationsvorrichtung 15 verwendet werden. Die Halterung ist in einer bevorzugten Ausführungsform um eine oder zwei Achsen drehbar gelagert, so dass der Neigungswinkel der Anzeigefläche 8 durch den Fahrer beziehungsweise Beifahrer auf eine optimale Ablesbarkeit eingestellt werden kann.

Figur 2 zeigt ein erstes Ausführungsbeispiel für eine erfindungsgemäße Ausführung eines elektrischen Gerätes als eine Anzeigevorrichtung 20. Es ist ein Längsschnitt von der Vorderseite zu der Rückseite der Anzeigevorrichtung 20 dargestellt. Ebenso ist eine Abdeckung 30, dargestellt die an der Anzeigevorrichtung 20 anbringbar ist.

Die Anzeigevorrichtung 20 weist ein Frontteil 21 auf, an dem eine Anzeigefläche 8 angeordnet ist. Das Frontteil 21 mit der Anzeigefläche 8 weist zu einem Betrachter der Anzeigevorrichtung 20. In der Figur 1 ist die Anzeigefläche 8, die dem Innenraum des Fahrzeugs zuweist, in einer Aufsicht dargestellt. Ferner weist die Anzeigevorrichtung 20 ein Rückseitenteil 22 auf, die bei der Anordnung gemäß der Figur 1 der Windschutzscheibe 6 zuweist. An dem Rückseitenteil 22 ist eine erste Wippe 23 mit einem ersten Arm 24 und einem zweiten Arm 25 an einer Drehachse 26 befestigt. Der erste Arm 24 ist rechtwinklig zu dem zweiten Arm 25 angeordnet, wobei der erste Arm 24 und der zweite Arm 25 starr miteinander verbunden sind. Der erste Arm weist einen Vorsatz 46 und der zweite Arm 25 einen Rasthaken 27 auf. Die erste Wippe 23 ist derartig angeordnet, dass der Vorsatz 46 über eine Oberfläche 28 des Rückseitenteils 22 hinausragt. Bei der Darstellung gemäß der Figur 2 liegt der erste Arm 24 auf einer Kantenfläche 29 des Rückseitenteils 22 auf, die an die Oberfläche 28 des Rückseitenteils 22 anschließt und ungefähr rechtwinklig zu der Oberfläche 28 verläuft. Der Rasthaken 27 greift in eine Öffnung 31 einer Halterung 32 ein, an der die Anzeigevorrichtung 20 angeordnet und befestigt ist. Die Öffnung 31 ist in eine Oberfläche 33 der Halterung 32 eingebracht, die der Anzeigevorrichtung 20 zuweist. Die Anzeigevorrichtung schließt mit einer Oberfläche 28', die sich an den Bereich der ersten Wippe 23 anschließt, an die Oberfläche 33 der Halterung 32 an. Die Halterung 32 ist auf der Oberfläche 5 des Dashboards angeordnet, vorzugsweise auf einer Oberfläche einer Instrumententafel im Bereich oberhalb der Mittelkonsole. In einem Verbindungsbereich 34 ist die Halterung 32 mit in der Figur 2 nicht dargestellten Befestigungselementen, vorzugsweise Schrauben oder Rasthaken an der Oberfläche 5 befestigt. An der Halterung 32 ist eine Führungsschiene 35 angeordnet, die an die Form des Rückseitenteils 22 der Anzeigevorrichtung 20 angepasst ist. In einem ersten Ausführungsbeispiel ist an der Drehachse 26 der ersten Wippe 23 ein Federelement angeordnet, dass die Drehachse 26 ohne eine äußere Krafteinwirkung in der in der Figur 2 dargestellten Position hält, in dem eine Federkraft die erste Wippe 23 mit dem ersten Arm 24 gegen die Kantenfläche 29 des Rückseitenteils 22 drückt, wobei zugleich der Rasthaken 27 in die Öffnung 31 der Halterung 32 gedrückt wird, so dass die Anzeigevorrichtung durch den mittels Federkraft in die Öffnung 31 gedrückten Rasthaken an der Halterung 32 gehalten wird. Durch die Führungsschiene 35 und durch das Aufliegen der Oberfläche 28' der Anzeigevorrichtung 20 auf der Oberfläche 33 der Halterung 32 wird dabei die Lage der Anzeigevorrichtung 20 gegenüber der Halterung 32 stabilisiert und abgesichert.

In einem weiteren Ausführungsbeispiel ist die Drehachse 26 selbst aus einem federnden Material, z.B. einem Polyamid mit einem zugefügten Elastomer, oder aus einem Gummimaterial gefertigt, das mit einer entsprechenden Rückstellkraft gegenüber einer Ruhelage verspannt ist, so dass auch in diesem Fall der erste Arm 24 gegen die Kantenfläche 29 gedrückt wird. Die Rückstellung erfolgt hierbei mittels der durch die Verspannung hervorgerufene Torsionskraft der Drehachse 26. Eine Spannungsversorgung und eine elektrische Ansteuerung der Anzeigefläche 8, die sowohl in dem Frontteil 21 als auch in dem Rückseitenteil 22 der Anzeigevorrichtung 20 angeordnet ist, ist in der Figur 2 ebenso nicht dargestellt wie eine Datenverbindung bzw. Spannungsversorgung, die von der Anzeigevorrichtung 20 zu der Halterung 32 und von dort in den Bereich des Dashboards durch die Oberfläche 5 geführt wird. An der der Anzeigevorrichtung 20 abgewandten Seite der Halterung 32 ist eine Erweiterung 36 angebracht, auf die die Abdeckung 30 aufgesetzt wird. Die Abdeckung 30 weist eine Öffnung 37 auf, die zur Aufnahme der Anzeigevorrichtung dient. Eine erste Seitenfläche 38 der Abdeckung 30 ist geschlossen aufgeführt, so dass durch sie die Anzeigefläche 8 abdeckbar ist. Auf einer der ersten Seitenfläche 38 gegenüberliegenden zweiten Seitenfläche 39 ist eine zweite Wippe 40 angeordnet, die an einer Drehachse 41 befestigt ist. Die zweite Wippe 40 weist ein Bedienfeld 42 auf, das mit einer Aufrauung einerseits einem Benutzer anzeigt, dass an dieser Stelle einen Druck auf die zweite Wippe 40 auszuüben ist, und andererseits durch die Aufrauung eine sichere Bedienung ermöglicht. Die Aufrauung ist an dem Bedienfeld 42 an einer ersten Seite der zweiten Wippe 40 ausgehend von einer Drehachse 41 angeordnet. An einer zweiten Seite der Drehachse 41 ist ein Rasthaken 43 an die zweite Wippe 40 angeformt. An der Drehachse 41 ist in einem ersten Ausführungsbeispiel ebenfalls ein Federelement angeordnet, dass in einem Ruhezustand ohne Druck auf das Bedienfeld 42 die zweite Wippe 40 parallel zu der zweiten Seitenfläche 39 ausrichtet, so dass nur der Rasthaken 43 zu dem Inneren der Abdeckung 30 über die zweite Seitenfläche 39 hinausragend ist. In einem zweiten Ausführungsbeispiel ist die Drehachse 41 als eine Torsionsachse ausgeführt, die gegen eine Ruhelage verspannt ist und die ebenfalls für eine Ausrichtung der zweiten Wippe 40 in der Ebene der zweiten Seitenfläche 39 sorgt. Auf einer der Öffnung 37 zuweisenden Seite der zweiten Wippe 40 weist die zweite Seitenfläche 39 eine Öffnung 44 auf, die an die Form der Erweiterung 36 der Halterung 32 angepasst ist. Wird nun die Abdeckung 30 mit der Öffnung 37 falsch auf die Anzeigevorrichtung aufgesetzt, so dass die erste Seitenfläche 38 an dem Rückseitenteil 22 der Anzeigevorrichtung angeordnet wird, so stößt die erste Seitenfläche 38 auf die Erweiterung 36 der Halterung 32 und verhindert ein falsches Aufsetzen der Abdeckung 30. Bei einem korrekten Aufsetzen der Abdeckung 30 greift die Erweiterung 36 in die Öffnung 44 der Abdeckung 30.

In der Figur 3 ist die Abdeckung 30 auf die Anzeigevorrichtung 20 aufgesetzt. Hier und im folgenden bezeichnen gleiche Bezugszeichen die gleichen Elemente. Der Rasthaken 43 der zweiten Wippe 40 greift an dem Vorsatz 46 des ersten Arms 24 der ersten Wippe 23 an und hebt den ersten Arm 24 der ersten Wippe 23 von der Kantenfläche 29 ab. Durch die Federspannung, hervorgerufen z.B. durch das an der Drehachse 41 angeordneten Federelement, wird die zweite Wippe 40 in der Ebene der zweiten Seitenfläche 39 ausgerichtet. Die erste Wippe 23 wird in Folge der starren Verbindung des ersten Armes 24 mit dem zweiten Arm 25 um die Drehachse 26 gedreht, so dass der Rasthaken 27 aus der Öffnung 31 der Halterung 32 herausgehoben wird. Der Rasthaken 43 greift an der durch den Übergang der Oberfläche 28 zu der Kantenfläche 29 des Rückseitenteils 22 gebildeten Kante 45 ein, so dass die Abdeckung 30 nunmehr fest mit der Anzeigevorrichtung 20 verbunden ist. Ferner wird die Anzeigevorrichtung 20 über die Führungsschiene 35 bzw. die zweite Seitenfläche 39 der Abdeckung 30 in einer stabilen Lage an der Halterung 32 gehalten. Die Anzeigevorrichtung 20 ist nun von der Oberfläche 5 zusammen mit der Abdeckung 30 abhebbar. In der Figur 4 ist nun die von der Halterung 32 abgehobene Anzeigevorrichtung gezeigt, bei der durch den Rasthaken 43 die Anzeigevorrichtung 20 in der Abdeckung 30 gehalten wird. Durch eine in der Figur 4 nicht gezeigte Sperre ist die zweite Wippe 40 in einem bevorzugten Ausführungsbeispiel nach einer Entnahme aus der Halterung 32 gegen eine Betätigung gesperrt, so dass die Anzeigevorrichtung 20 erst nach einem Aufsetzen auf die Halterung 32 wieder aus der Abdeckung 30 entnommen werden kann. Alternativ kann auch die Anzeigevorrichtung 20durch eine Sperre in der Abdeckung blockiert werden, sofern die Anzeigevorrichtung 20 sich nicht auf der Halterung 32 befindet.

Der umgekehrte Vorgang, also das Aufsetzten der Abdeckung 30 mit der Anzeigevorrichtung 20 und das Ablösen der Abdeckung 30, erfolgt in der Weise, dass zunächst die Abdeckung 30 mit der Anzeigevorrichtung 20 auf die Halterung 32 aufgesetzt wird. Anschließend wird auf das Bedienfeld 42 ein Druck ausgeübt, wodurch der Rasthaken 43 aus dem durch den ersten Arm 24 und die Kantenfläche 29 gebildeten Spalt herausgezogen wird. Durch die Verspannung der Drehachse 26 bzw. durch ein an der Drehachse 26 angeordnetes Federelement wird die erste Wippe 23 in ihre Ausgangslage zurückgestellt, so dass der erste Arm 24 wieder auf der Kantenfläche 29 aufliegt und der Rasthaken 27 in die Öffnung 31 der Halterung 32 einrastet. Die Anzeigevorrichtung 20 ist hierdurch wieder mit der Halterung 32 verbunden und die Abdeckung 30 kann bei auf das Bedienfeld 42 ausgeübtem Druck von der Anzeigevorrichtung 20 abgehoben werden. Nachdem die Abdeckung soweit angehoben wurde, dass der Rasthaken 43 die Kante 45 passiert hat, kann der Benutzer das Bedienfeld 42 loslassen und die Abdeckung 30 kann nun vollständig abgehoben werden.

In der Figur 5 ist ein Deckel 50 gezeigt, der an der Abdeckung 30 anbringbar ist und der sowohl die Öffnung 37 als auch die Öffnung 44 verschließt. In einem ersten Ausführungsbeispiel ist der Deckel 50 so ausgeführt, dass das Innenmaß des Deckels 50 so gewählt ist, dass der Deckel 50 bündig an die erste Seitenfläche 38 und die zweite Seitenfläche 39 der Abdeckung 30 anschließt. Insbesondere schließt der Deckel auch an die in der Figur 5 nicht dargestellten Seitenflächen an, die außerhalb der dargestellten Schnittebene liegen und die das Rückseitenteil 22 mit dem Frontteil 21 verbinden. In einem bevorzugten Ausführungsbeispiel sind an dem Deckel 50 in der Figur 5 nicht dargestellte Nuten angeordnet, die in Öffnungen der Abdeckung 30 eingreifen und den Deckel 50 an der Abdeckung 30 halten. Der Deckel ist dabei zumindest so flexibel ausgeführt, dass die Nuten durch ein leichtes Verbiegen des Deckels 50 aus den Öffnungen hebbar sind. Der Deckel 50 dient somit als Sicherung für die Anzeigevorrichtung 20.

In der Figur 6 ist ein weiteres Ausführungsbeispiel für eine Anzeigevorrichtung 120 mit einer an diese Ausführung angepassten Abdeckung 130 dargestellt. Die Abdeckung 130 unterscheidet sich von der Abdeckung 30 durch die Ausführung einer Wippe 140, bei der anstelle eines Rasthakens mit einem rechteckigen Querschnitt ein Rasthaken 143 angeformt ist, der eine Seitenfläche 144 aufweist, die an einer von der Drehachse 41 abweisenden Seite abgerundet ausgeführt ist. Der Rasthaken 143 passt in eine Öffnung 145, die in einer Oberfläche 128 des Rückseitenteils 22 der Anzeigevorrichtung 120 eingebracht ist. In der Öffnung 145 ist ein Stempel 146 angeordnet, der durch ein Federelement 147 gegen eine aus der Oberfläche 128 des Rückseitenteils 22 ausgebildeten Haltekante 148 gedrückt wird. An den Stempel 146 ist eine Erweiterung 149 mit einem Rasthaken 127 angeformt, der in eine Öffnung 131 einer Halterung 132 eingreift, die bis auf die Ausführung der Öffnung 131 der Halterung 32 gemäß der Figur 2 entspricht. Der Stempel 146 füllt die Öffnung 145 fast vollständig aus, so dass die Oberfläche 150 des Stempels nahezu bündig mit der Oberfläche 128 der Anzeigevorrichtung abschließt.

In der Figur 7 ist die Abdeckung 130 auf die Anzeigevorrichtung 120 aufgesetzt. Der Rasthaken 143 greift in die Öffnung 145 ein, wobei der Rasthaken 143 in einem ersten Ausführungsbeispiel von einem an der Drehachse 41 angeordneten Federelement oder in einem zweiten Ausführungsbeispiel von der durch die als Torsionsachse ausgeführten Drehachse 41 ausgeübten Torsionskraft in die Öffnung 145 gegen das Federelement 147 gedrückt wird. Hierbei ist die durch die Drehachse 41 ausgeübte Federkraft größer zu wählen, als die durch das Federelement 147 gegen den Stempel 146 ausübbare maximale Federkraft. Ein Einrasten erfolgt dabei in der Weise, dass durch die Oberfläche 128 der Rasthaken 143 gegen die Drehachse 41 bewegt wird und damit die Wippe 140 gegenüber der Drehachse 41 verstellt wird. Ist die Abdeckung 130 nun so weit auf die Anzeigevorrichtung 120 aufgesetzt, dass sich der Rasthaken 143 in der Höhe der Öffnung 145 befindet, so rastet der Rasthaken in die Öffnung 145 ein und bewegt den Stempel 146 gegen das Federelement 147. Hierbei wird der mit dem Stempel 146 verbundene Rasthaken 127 aus der Öffnung 131 angehoben. Durch das Einrasten des Rasthakens 143 in die Öffnung 145 ist nun die Abdeckung 130 fest mit der Anzeigevorrichtung 120 verbunden. Dagegen ist nun die Anzeigevorrichtung 120 aus der Halterung 132 gelöst. Damit wird die Abdeckung 130 zusammen mit der Anzeigevorrichtung 120 durch die Führungsschiene 135 und die zweite Seitenfläche 39 der Abdeckung 130 an der Halterung 132 gehalten und in ist einer der Oberfläche 5 des Dashboards abweisenden Richtung von der Halterung 132 entnehmbar.

In der Figur 8 ist die Abdeckung 130 mit der Anzeigevorrichtung 120 getrennt von der Halterung 132 dargestellt. Der umgekehrte Vorgang des Anbringens der Anzeigevorrichtung 120 an der Halterung 132 erfolgt in der Weise, dass die Abdeckung 130 mit der Anzeigevorrichtung 120 auf die Halterung 132 aufgesetzt und ein Druck auf das Bedienfeld 42 der Wippe 140 ausgeübt wird. Hierdurch wird der Rasthaken 143 aus der Öffnung 145 gehoben, so dass der Stempel 146 durch das Federelement 147 zurückgestellt wird, der Rasthaken 127 wieder in die Öffnung 131 einrastet und die Anzeigevorrichtung wieder an der Halterung 132 befestigt ist. Die Abdeckung 130 kann bei weiterem Druck auf das Bedienfeld 42 von der Halterung 132 abgenommen werden. Danach kann das Bedienfeld 42 losgelassen werden.

In der Figur 9 ist ein Ausführungsbeispiel für eine Halterung in einer Ansicht gemäß der Ansicht in der Figur 1 auf die Anzeigevorrichtung 7 bei einer abgenommenen Anzeigevorrichtung dargestellt. Die Halterung 232, die sowohl als eine Halterung 32 als auch als eine Halterung 132 ausgeführt sein kann, weist eine Öffnung 231 und eine Führungsschiene 35 auf. Neben der Öffnung 231 sind auf beiden Seiten elektrische Kontakte 233 angeordnet. In einem bevorzugten Ausführungsbeispiel sind die elektrischen Kontakte 233 vertieft angeordnet, so dass hierdurch ein Benutzer im Fahrzeug bei einer nicht aufgesetzten Anzeigevorrichtung die elektrischen Kontakte 233 nicht berühren kann.

In der Figur 10 ist eine Ansicht mit einem Blick auf das Rückseitenteil 22 der Anzeigevorrichtung dargestellt. Die in der Figur 10 dargestellte Anzeigevorrichtung 220 kann sowohl als eine Anzeigevorrichtung 120 gemäß der Figur 6 als auch als eine Anzeigevorrichtung 20 gemäß der Figur 2 ausgeführt sein. Das Rückseitenteil 22 weist eine Rückseite 228 auf, in die eine Vertiefung 250 eingebracht ist. In der Vertiefung ist ein Rasthaken 227 angeordnet, der ebenfalls als ein Rasthaken 27 oder 127 gemäß der Figur 2 bzw. 6 ausgeführt sein kann. Neben dem Rasthaken 227 sind elektrische Kontakte 233' angeordnet, die zu den elektrischen Kontakten 233 in der Halterung 232 passend ausgebildet sind. In einem bevorzugten Ausführungsbeispiel sind die elektrischen Kontakte 233' über die Oberfläche der Anzeigevorrichtung 220 erhoben ausgeführt, so dass sie in die Vertiefungen der elektrischen Kontakte 233 der Halterung 232 eingreifen können. Die Öffnung 250 ist in einem bevorzugten Ausführungsbeispiel so breit wie die Halterung 132 gewählt, so dass die Halterung 232 genau in die Öffnung 250 der Anzeigevorrichtung 220 passt. Als Gegenstück zu der Führungsschiene 35 in der Halterung 232 ist eine Vertiefung 35' in die Anzeigevorrichtung 220 eingebracht.

In der Figur 11 ist eine Rückansicht für ein Ausführungsbeispiel einer erfindungsgemäßen Abdeckung 230 dargestellt. In die zweite Seitenfläche 39 ist eine Öffnung 244 eingebracht, deren Größe der an der Halterung 32, 132 bzw. 232 angeordneten Erweiterung 36 entspricht. Durch die Öffnung 244 ist in der Figur 11 die erste Seitenfläche 38 der Anzeigevorrichtung 220 sichtbar. In einem bevorzugten Ausführungsbeispiel sind auf der ersten Seitenfläche 38 Bohrungen 251 eingebracht, in die an dem Deckel angeordnete Nuten eingreifen und die den Deckel 50 an der Abdeckung 230 halten. Über die elektrischen Kontakte 233, 233' werden Daten zur Anzeige auf der Anzeigefläche 8, z.B. von der Navigationsvorrichtung 15, an die Anzeigevorrichtung 220 übertragen. Die Bilderstellung erfolgt mittels einer in der Zeichnung nicht dargestellten, innerhalb der Anzeigevorrichtung 220 angeordneten Recheneinheit. Ebenso werden die über Bedienelemente 16 in die Anzeigevorrichtung eingegebenen Befehle, z.B. die Eingabe eines gewünschten Fahrziels, über die elektrischen Kontakte 233, 233' an die Navigationsvorrichtung 15 übertragen.

## Patentansprüche

1. Elektrisches Gerät vorzugsweise für die Verwendung in einem Fahrzeug, mit einer Abdeckung, wobei das elektrische Gerät an einer Halterung angeordnet ist und
wobei das elektrische Gerät aus der Halterung entnehmbar ist, wobei die Abdeckung (30, 130, 230) einen ersten Rasthaken (43, 143) aufweist, **dadurch gekennzeichnet, dass** der erste Rasthaken (43, 143) bei einem Aufstecken der Abdeckung (30, 130,230) auf das elektrische Gerät (20, 120, 220) derart in das elektrische Gerät (20, 120, 220) einrastet, dass das elektrische Gerät (20, 120, 220) aus der Halterung (32, 132, 232) gelöst wird.

2. Elektrisches Gerät nach Anspruch 1, **dadurch gekennzeichnet, dass** an dem elektrischen Gerät (20, 120) ein zweiter Rasthaken (27, 127) angeordnet ist, dass das elektrische Gerät (20, 120) durch den zweiten Rasthaken (27, 127) an der Halterung (32, 132) gehalten wird und dass der zweite Rasthaken (27, 127) durch ein an der Abdeckung (30, 130, 132) angeordnetes Bedienelement (40, 140) lösbar ist.

3. Elektrisches Gerät nach Anspruch 2, **dadurch gekennzeichnet, dass** das Bedienelement als eine Wippe (40, 140) ausgeführt ist.

4. Elektrisches Gerät nach einem der vorhergehenden Ansprüche, **dadurch gekennzeichnet, dass** an der Halterung (32, 132, 232) und an dem elektrischen Gerät (20, 120, 220) elektrische Kontakte (233, 233') angeordnet sind und dass ein Datensignal und/oder eine Betriebsspannung des elektrischen Geräts (20, 120, 220) über die elektrischen Kontakte (233, 233') zwischen der Halterung (32, 132, 232) und dem elektrischen Gerät (20, 120, 220) übertragbar sind.

5. Elektrisches Gerät nach einem der vorhergehenden Ansprüche, **dadurch gekennzeichnet, dass** die Abdeckung (30, 130, 230) mit einem Deckel (50) verschließbar ist.

6. Elektrisches Gerät nach einem der vorhergehenden Ansprüche, **dadurch gekennzeichnet, dass** an dem elektrischen Gerät (7, 20, 120, 220) Bedienelemente (16) angeordnet sind und dass Daten über die Bedienelemente (16) in das elektrische Gerät (7, 20, 120, 220) eingebbar sind.

7. Elektrisches Gerät nach einem der vorhergehenden Ansprüche, dass in dem elektrischen Gerät (20, 120, 220) eine Spannungsversorgung angeordnet ist und dass das elektrische Gerät nach der Entnahme aus der Halterung (32, 132, 232) mobil betreibbar ist.

8. Anzeigevorrichtung mit einer Anzeigefläche, vorzugsweise einer Flüssigkristallanzeige, **dadurch gekennzeichnet, dass** die Anzeigevorrichtung (7, 20, 120, 220) als ein elektrisches Gerät nach einem der vorhergehenden Ansprüche ausgeführt ist.

9. Anzeigevorrichtung nach Anspruch 8, **dadurch gekennzeichnet, dass** durch die Abdeckung (30, 130, 230) die Anzeigefläche (8) abdeckbar ist.

10. Verwendung einer Anzeigevorrichtung nach einem der Ansprüche 8-9 in einem Kraftfahrzeug vorzugsweise als eine Anzeigevorrichtung für eine Navigationsvorrichtung.

11. Fahrzeug mit einer ersten Anzeigevorrichtung nach einem der Ansprüche 8-9, **dadurch gekennzeichnet, dass** in dem Fahrzeug eine zweite Anzeigevorrichtung (13) angeordnet ist und dass in der zweiten Anzeigevorrichtung (13) Daten anzeigbar sind, wenn die erste Anzeigevorrichtung (7) aus der Halterung gelöst ist.

## Claims

1. Electrical device, preferably for use in a vehicle, having a cover, the electrical device being arranged on a holder, and it being possible to remove the electrical device from the holder, the cover (30, 130, 230) having a first latching hook (43, 143), **characterized in that** the first latching hook (43, 143) latches into the electrical device (20, 120, 220) when the cover (30, 130, 230) is plugged onto the electrical device (20, 120, 220) such that the electrical device (20, 120, 220) is released from the holder (32, 132, 232).

2. Electrical device according to Claim 1, **characterized in that** a second latching hook (27, 127) is arranged on the electrical device (20, 120), **in that** the electrical device (20, 120) is held on the holder (32, 132) by the second latching hook (27, 127), and **in that** the second latching hook (27, 127) can be released by an operating element (40, 140) arranged on the cover (30, 130, 132).

3. Electrical device according to Claim 2, **characterized in that** the operating element is in the form of a rocker (40, 140).

4. Electrical device according to one of the preceding claims, **characterized in that** electrical contacts (233, 233') are arranged on the holder (32, 132, 232) and on the electrical device (20, 120, 220), and **in that** a data signal and/or an operating voltage of the electrical device (20, 120, 220) can be transmitted via the electrical contacts (233, 233') between the holder (32, 132, 232) and the electrical device (20, 120, 220).

5. Electrical device according to one of the preceding claims, **characterized in that** the cover (30, 130, 230) can be closed with a lid (50).

6. Electrical device according to one of the preceding claims, **characterized in that** operating elements (16) are arranged on the electrical device (7, 20, 120, 220), and **in that** data can be input into the electrical device (7, 20, 120, 220) via the operating elements (16).

7. Electrical device according to one of the preceding claims, **characterized in that** a voltage supply is arranged in the electrical device (20, 120, 220), and **in that** the electrical device can be operated in mobile fashion once it has been removed from the holder (32, 132, 232).

8. Display apparatus having a display area, preferably a liquid crystal display, **characterized in that** the display apparatus (7, 20, 120, 220) is in the form of an electrical device according to one of the preceding claims.

9. Display apparatus according to Claim 8,
**characterized in that** the display area (8) can be covered by means of the cover (30, 130, 230).

10. Use of a display apparatus according to one of Claims 8 - 9 in a motor vehicle, preferably as a display apparatus for a navigation apparatus.

11. Vehicle having a first display apparatus according to one of Claims 8 - 9, **characterized in that** a second display apparatus (13) is arranged in the vehicle, and **in that** data can be displayed in the second display apparatus (13) once the first display apparatus (7) has been released from the holder.

## Revendications

1. Appareil électrique destiné à être utilisé de préférence dans un véhicule automobile et monté sur un support en pouvant en être détaché, et comprenant un capot (30, 130, 230) qui présente un premier crochet d'accrochage (43, 143),
**caractérisé en ce que**
lors de l'emboîtement du capot (30, 130, 230) sur l'appareil électrique (20, 120, 220), le premier crochet (43, 143) s'enclenche dans l'appareil électrique (20, 120, 220) de telle sorte que l'appareil électrique (20, 120, 220) est libéré du support (32, 132, 232).

2. Appareil électrique selon la revendication 1,
**caractérisé en ce que**
sur l'appareil électrique (20, 120, 220) comporte un second crochet d'accrochage (27, 127) qui maintient l'appareil électrique (20, 120) sur le support (32, 132), et le second crochet (27, 127) peut être dégagé par un élément de commande (40, 140) prévu sur le capot (30, 130, 132).

3. Appareil électrique selon la revendication 1,
**caractérisé en ce que**
l'élément de commande est constitué par une bascule (40, 140).

4. Appareil électrique selon une des revendications précédentes,
**caractérisé en ce que**
des contacts électriques (233, 233') sont disposés sur le support (32, 132, 232) et sur l'appareil électrique (20, 120, 220), et un signal de données et/ou une tension de service de l'appareil électrique (20, 120, 220) peuvent être transmis entre le support (32, 132, 232) et l'appareil électrique (20, 120, 220) par l'intermédiaire des contacts électriques (233, 233').

5. Appareil électrique selon une des revendications précédentes,
**caractérisé en ce que**
le capot (30, 130, 230) peut être fermé par un couvercle (50).

6. Appareil électrique selon une des revendications précédentes,
**caractérisé en ce que**
des éléments de commande (16) sont disposés sur l'appareil électrique (7, 20, 120, 220), et des données peuvent être entrées dans l'appareil électrique (20, 120, 220) au moyen des éléments de commande (16).

7. Appareil électrique selon une des revendications précédentes,
**caractérisé en ce qu'**
une alimentation en tension est disposée dans l'appareil électrique (20, 120, 220) et l'appareil électrique peut être utilisé comme appareil mobile après avoir été retiré du support (32, 132, 232).

8. Dispositif d'affichage possédant une surface d'affichage, de préférence un affichage à cristaux liquides,
**caractérisé en ce que**
le dispositif d'affichage (7, 20, 120, 220) est constitué par un appareil électrique selon une des revendications précédentes.

9. Dispositif d'affichage selon la revendication 8,
**caractérisé en ce que**
la surface d'affichage (8) peut être recouverte par le capot (30, 130, 230).

10. Utilisation d'un dispositif d'affichage selon la revendication 8 ou 9 dans un véhicule automobile, de préférence comme dispositif d'affichage pour un dispositif de navigation.

11. Véhicule équipé d'un premier dispositif d'affichage selon l'une des revendications 8, 9,
**caractérisé en ce qu'**
un second dispositif d'affichage (13) est disposé dans le véhicule et des données peuvent être affichées dans le second dispositif d'affichage lorsque le premier dispositif d'affichage (7) est détaché du support.
